Europäisches Patentamt

European Patent Office

Office européen des brevets

(19)

(11) Veröffentlichungsnummer : **0 151 690**
**B1**

(12) **EUROPÄISCHE PATENTSCHRIFT**

(45) Veröffentlichungstag der Patentschrift :
16.06.87

(21) Anmeldenummer : **84112368.0**

(22) Anmeldetag : **13.10.84**

(51) Int. Cl.⁴ : **H 01 R 13/58**

(54) Verbindungsanordnung mit Klemmelementen zur Verklemmung eines Flachkabels.

(30) Priorität : **12.01.84 DE 3400935**

(43) Veröffentlichungstag der Anmeldung :
**21.08.85 Patentblatt 85/34**

(45) Bekanntmachung des Hinweises auf die Patenterteilung : **16.06.87 Patentblatt 87/25**

(84) Benannte Vertragsstaaten :
**BE DE FR NL**

(56) Entgegenhaltungen :
**FR-A- 2 236 290**
**US-A- 3 954 320**
**US-A- 4 160 575**

(73) Patentinhaber : **Grote & Hartmann GmbH & Co. KG**
**Am Kraftwerk 13**
**D-5600 Wuppertal 21 (DE)**

(72) Erfinder : **Brandstäter, Manfred**
**In der Krim 40a**
**D-5600 Wuppertal 21 (DE)**
Erfinder : **Könnemann, Alfred, Dipl.-Ing.**
**Etzelstrasse 34**
**D-5600 Wuppertal 21 (DE)**

(74) Vertreter : **Patentanwälte Dr. Solf & Zapf**
**Schlossbleiche 20 Postfach 13 01 13**
**D-5600 Wuppertal 1 (DE)**

**Beschreibung**

Die Erfindung betrifft eine Verbindungsanordnung zum Verbinden von mehradrigen Flachkabeln mit einem Stecker, welcher einen Klemmbereich mit einem Steckkanal aufweist, in den das mehradrige, zum Teil entmantelte Flachkabel einführbar ist, wobei der Klemmbereich zusätzlich mit über dem Steckkanal, in letzteren mündenden Querkanälen versehen ist, in welchen Klemmelemente angeordnet sind, die in den Steckkanal eindrückbar und festsetzbar sind, so daß eine Verklemmung der Ummantelung und der einzelnen abgemantelten, isolierten Leiter des mehradrigen Flachkabels im Steckkanal bewirkt wird.

Auf dem die Erfindung betreffenden Sachgebiet ist bereits eine Steckverbindung für mehradrige Telefonschnüre bekannt (DE-C-24 32 122), bei welcher das der Aufnahme der Telefonschnur dienende Gehäuse mit einem Steckkanal und in diesen mündenden Querkanälen versehen ist. Innerhalb jedes Querkanals ist an einer Innenwandung ein einstückig mit dem Gehäuse über ein Filmscharnier verbundenes Klemmstück angelenkt. Die Klemmstücke können mit Hilfe entsprechender Werkzeuge jeweils derart verschwenkt werden, daß eine Verklemmung der Ummantelung bzw. der einzelnen abgemantelten isolierten Leiter der mehradrigen Telefonschnur gegenüber dem Gehäuse zustande kommt. Die Klemmstücke verrasten im Klemmsitz, indem sie teilbereichsweise in den Steckkanal ragen.

Die Filmscharniere gewährleisten jedoch nicht die gewünschte langzeitige Verklemmung, weil sie ggf. mit dem Werkzeug beschädigt werden können oder ermüden. Außerdem ist die Formung der Klemmstücke schwierig ; die dünnen Filmscharniere können nicht mit der erforderlichen Genauigkeit bezüglich ihrer Dicke hergestellt werden.

Aufgabe der vorliegenden Erfindung ist, eine Verbindungsanordnung mit einer zuverlässigeren und einfacheren Verklemmung für die ummantelten und abgemantelten Bereiche der einzelnen Adern eines elektrischen Flachkabels zu schaffen.

Erfindungsgemäß wird dies durch die Merkmale gemäss dem zweiten Teil des Patentanspruchs 1 erreicht.

Aufgrund der im Rahmen der vorliegenden Erfindung vorgesehenen Verwendung von Klemmbügeln können sowohl die Ummantelung als auch die einzelnen Leiter des mehradrigen Flachkabels durch Eindrücken eines einzigen Klemmbügels positionsmäßig fixiert werden. Die Verrastung des Klemmbügels im Klemmbereich gewährleistet dabei, daß die Verklemmung über lange Zeiträume hinweg in gewünschter Weise wirksam ist.

Vorteilhafte Weiterbildungen der Erfindung ergeben sich aus den Unteransprüchen.

Die Erfindung wird im folgenden anhand von Ausführungsbeispielen näher erläutert und beschrieben, wobei auf die beigefügte Zeichnung Bezug genommen ist. Es zeigen :

Figur 1 schematisch einen Querschnitt durch eine erste Ausführungsform der erfindungsgemäßen Verbindungsanordnung mit dem Klemmbügel in der Vorraststellung ;

Figur 2 einen Schnitt gemäß Fig. 1 mit dem Klemmbügel in Raststellung ;

Figur 3 schematisch einen Querschnitt einer zweiten Ausführungsform der erfindungsgemäßen Verbindungsanordnung mit dem Klemmbügel in der Vorraststellung ;

Figur 4 einen Schnitt gemäß Fig. 3 mit dem Klemmbügel in Raststellung.

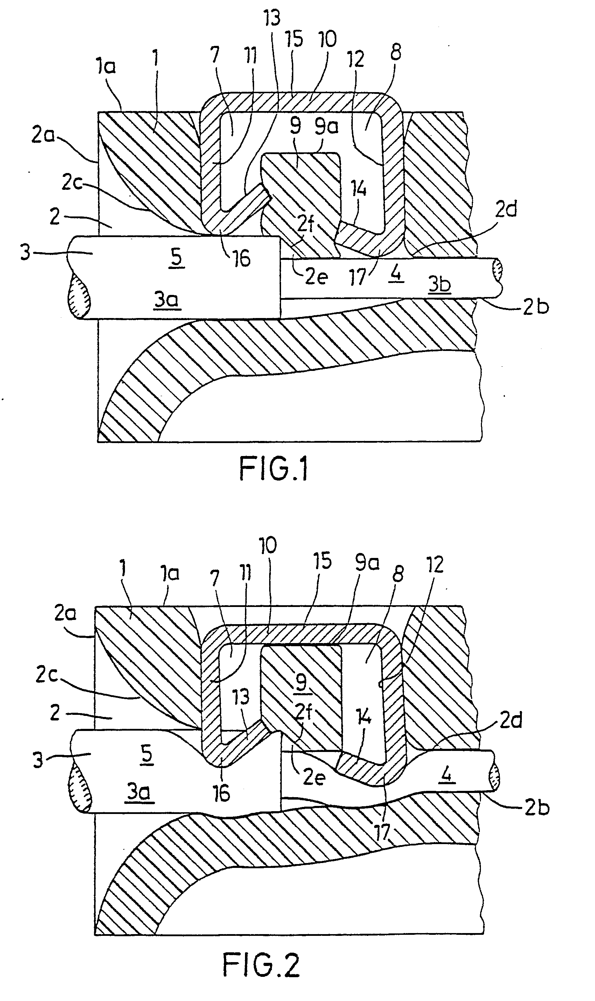

Die in Fig. 1 abgebildete erste Ausführungsform der erfindungsgemäßen Verbindungsanordnung weist einen Klemmbereich 1 auf, der innerhalb des Gehäuses eines elektrischen Steckers angeordnet und vorzugsweise einstückig mit demselben ausgebildet ist. Dieser wie üblich im Spritzgußverfahren herstellbare Bereich 1 besteht aus einem Isoliermaterial, welches in geringfügigem Maße elastisch verformbar ist. Der Klemmbereich 1 ist mit einem Steckkanal 2 versehen, welcher in etwa rechteckförmige Eingangs- und Ausgangsöffnungen 2a, 2b aufweist. In seinem Inneren weist der Steckkanal 2 einen erweiterten Bereich 2c und einen verengten Bereich 2d auf, wobei zwischen diesen beiden Bereichen 2c und 2d ein Übergangsbereich 2e mit einer schräg verlaufenden Wandung 2f vorgesehen ist. Der Steckkanal 2 dient der Aufnahme eines mehradrigen Flachkabels 3, welches eine Mehrzahl von isolierten Leitern 4 aufweist, die von einer äußeren Ummantelung 5 umgeben sind. Im Bereich des vorderen Endes des Flachkabels 3 ist die Ummantelung 5 zum Teil entfernt, so daß auf diese Weise ummantelte und nicht ummantelte Bereiche 3a und 3b des mehradrigen Flachkabels 3 gebildet werden. Der Steckkanal 2 ist in bezug auf das zu verklemmende Flachkabel 3 derart dimensioniert, daß der Innendurchmesser des erweiterten Bereichs 2c des Steckkanals 2 größer als der Außendurchmesser des Flachkabels 3 einschließlich der Ummantelung 5 ist, während der Innendruchmesser des verengten Bereichs 2d des Steckkanals 2 größer als der Außendurchmesser der Leiter 4, jedoch kleiner als der Außendurchmesser der Ummantelung 5 ist. Beim Einschieben des Flachkabels 3 mit seinen ummantelten und nicht ummantelten Bereichen 3a und 3b findet die vordere Kante der Ummantelung 5 einen Anschlag an der schräg verlaufenden Wandung 2f, so daß auf diese Weise gemäß Fig. 1 das vordere Ende des Flachkabels 3 in dem jeweiligen Steckkanal 2 positioniert wird.

Der Steckbereich 1 weist zwei senkrecht zum Steckkanal 2 ausgerichtete, parallel zueinander verlaufende Querkanäle 7 und 8 auf, welche in den Steckkanal 2 einmünden. Diese Querkanäle 7, 8 sind derart angeordnet, daß im eingeschobenen Zustand des Flachkabels 3 der Querkanal 7 auf den ummantelten Bereich 3a und der Querkanal 8 auf den nicht ummantelten Bereich 3b des Flachkabels 3 stoßen. Im Übergangsbereich 2e des Steckkanals 2 ist zwischen den beiden Querkanälen 7, 8 ein Verbindungssteg 9 vorgesehen, welcher gegenüber der Außenfläche 1a des Steckbereichs 1 eine tiefergelegte Außenfläche 9a aufweist, wobei die Bedeutung der Tieferlegung der Außenfläche 9a des Verbindungssteg 9 noch erläutert wird.

In den beiden Querkanälen 7, 8 des Klemmbereichs 1 ist ein U-förmiger, vorzugsweise aus einem feder- elastischen Metall gefertiger Klemmbügel 10 einsetzbar, welcher vorzugsweise durch Verbiegen eines entsprechenden Metallbandes gefertigt ist. Die Schenkel 11 und 12 dieses Klemmbügels 10 weisen an ihren freien Enden Endabschnitte 13, 14 auf, welche widerhakenförmig aufeinander zu bzw. einwärts und nach oben abgebogen sind, wobei der zwischen den Schenkeln 11, 12 und Endabschnitten 13, 14 eingeschlossene Winkel etwa 60° beträgt. Nach unten hin bilden die Schenkel 11, 12 und Endabschnitte 13, 14 des Klemmbügels 10 relativ schmale Klemmflächen bzw. Klemmkanten 16, 17, mit welchen eine Verklemmung der ummantelten und nicht ummantelten Bereiche 3a, 3b des Flachkabels 3 vorgenommen wird. Der Schenkel 12 des Klemmbügels 10 ist etwas länger als der Schenkel 11 dimensioniert, wobei die Längendifferenz zwischen den beiden Schenkeln 11, 12 etwa der Dicke der Ummantelung 5 des Flachkabels 3 entspricht. Das die Schenkel 11, 12 verbindende Joch 15 ist so lang, daß die beiden Schenkel 11, 12 des Klemmbügels jeweils an der dem Verbindungssteg 9 gegenüberliegenden Innenwandung der Querkanäle 7, 8 anliegen, während die Endabschnitte 13, 14 mit ihren nach innen und oben abgewinkelten Enden so weit in Richtung des Verbindungssteges 9 ragen, daß sich die Spitzen der Endabschnitte gegen die Seitenfläche des Verbindungssteges abstützen und somit bereits in der nur teilweise eingedrückten Lage des Klemmbügels 10 eine Verklemmung zustande kommt, wie dies in Fig. 1 dargestellt ist.

Die Funktionsweise der beschriebenen Verbindungsanordnung ergibt sich aus Fig. 1 und 2. Bereits beim Bauteilhersteller kann der Klemmbügel 10, wie in Fig. 1 dargestellt, unverlierbar in die Querkanäle 7 und 8 hineingedrückt sein, wobei die nach innen ragenden Enden der Endabschnitte 13 und 14 der Klemmbügel 10 auch eine elastische Eindrückung des Verbindungssteges 9 hervorrufen können, so daß der Klemmbügel 10 einen festen Sitz erhält. Dabei ist der Klemmbügel 10 nur so weit in die beiden Querkanäle 7 und 8 eingeschoben, daß der Steckkanal 2 mit seinen erweiterten und verengten Bereichen 2c und 2d freigehalten ist.

In diesem Zustand kann ein teilweise abgemanteltes mehradriges Flachkabel 3 in den Steckkanal 2 eingeschoben werden, bis die vordere Kante der Ummantelung 5 des Flachkabels 3 an der im Bereich des Verbindungssteges 9 des Klemmbereichs 1 vorgesehenenschräg verlaufenden Wandung 2f anstößt. Danach wird auf das Joch 15 des Klemmbügels 10 gedrückt, wodurch der Klemmbügel 10 so weit in das Innere des Klemmbereichs 1 geschoben wird, ggf. bis das Joch 15 auf der Außenfläche 9a des zwischen den Querkanälen 7, 8 vorhandenen Verbindungssteges 9 zum Aufliegen gelangt. Entsprechend Fig. 2 werden dabei die an den vorderen Enden der Schenkel 11 und 12 vorgesehenen schmalen Klemmflächen 16 und 17 gegen die ummantelten und nicht ummantelten Bereiche 3a, 3b des Flachkabels 3 gedrückt, wobei es zu einer entsprechenden Quetschung des Flachkabels 3 kommt. Der Klemmbügel 10 wird so weit in die Querkanäle 7 und 8 eingeschoben, bis die nach innen ragenden Enden der Endabschnitte 13 und 14 zumindest zum Teil den Verbindungssteg 9 untergreifen. Dieses Untergreifen des Verbindungssteges 9 ergibt eine Verrastung, so daß auf diese Weise eine ausgezeichnete positionsmäßige Arretierung zustande kommt. In der in Fig. 2 dargestellten arretierten Position liegt das Joch 15 des Klemmbügels 10 unterhalb der Außenfläche 1a des Klemmbereichs 1, so daß der Bügel geschützt vor Beschädigungen angeordnet ist.

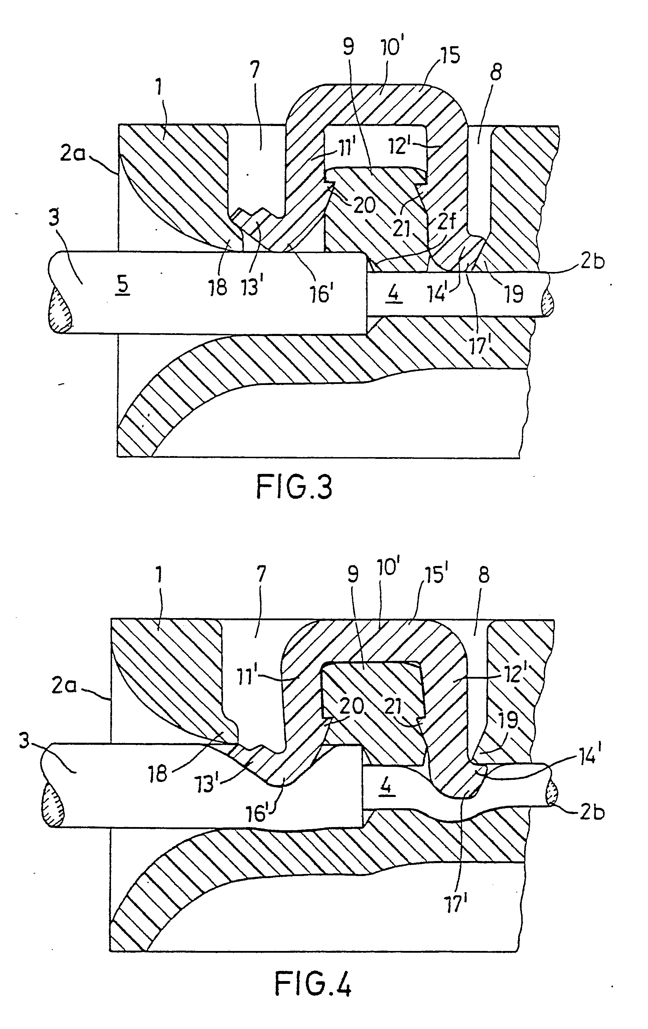

Die in den Fig. 3 und 4 dargestellte Ausführungsform weist viele Merkmale der Ausführungsform nach den Fig. 1 und 2 auf, was durch die Verwendung gleicher Bezugszeichen zum Ausdruck kommt. Der Querkanal 7 ist jedoch etwas breiter ausgeführt und es sind außerdem zwei Laschen 18, 19 vorgesehen, welche an der Unterkante der Querkanäle 7, 8, und zwar jeweils auf der dem Verbindungssteg 9 gegenüberliegenden Seite in die beiden Querkanäle 7, 8 hineinragen.

Zudem wird ein U-förmiger, aus einem federelastischen Kunststoff gefertiger Klemmbügel 10' verwendet. Nach innen hin können die beiden Schenkel 11', 12' des Klemmbügels 10' zahnartige Vorsprünge 20, 21 aufweisen, deren Funktion im folgenden noch beschrieben wird. Die Schenkel 11', 12' sind an ihren freien Enden mit Endabschnitten 13', 14' versehen, welche widerhakenförmig nach außen ragen.

Die Endabschnitte 13', 14' mit ihren nach außen abgewinkelten Enden ragen so weit in die von dem Verbindungssteg 9 weisende Richtung, daß sie im nur teilweise eingedrückten Zustand des Klemmbügels 10 auf den Vorsprüngen 20, 21 ruhen, während die Schenkel am Verbindungssteg ggf. klemmend anliegen.

Die Funktionsweise dieser Verbindungsanordnung entspricht der anhand der Fig. 1 und 2 erläuterten. Der Klemmbügel 10' wird in diesem Fall so weit heruntergedrückt, bis die nach außen ragenden Enden der Endabschnitte 13' und 14' zumindest zum Teil die Laschen 18, 19 untergreifen.

**Patentansprüche**

1. Verbindungsanordnung zum Verbinden von mehradrigen Flachkabeln (3) mit einem Stecker, welcher einen Klemmbereich (1) mit einem Steckkanal (2) aufweist, in den das mehradrige, zum Teil entmantelte Flachkabel (3) einführbar ist, wobei der Klemmbereich (1) zusätzlich mit über dem Steckkanal (2), in letzteren mündenden Querkanälen (7, 8) versehen ist, in welchen Klemmelemente angeordnet sind, die in den Steckkanal (2) eindrückbar und festsetzbar sind, so daß eine Verklemmung der Ummantelung (5) und der einzelnen abgemantelten isolierten Leiter (4) des mehradrigen Flachkabels (3) im Steckkanal (2) bewirkt wird, dadurch gekennzeichnet, daß die Klemmelemente durch die Schenkel (11, 12 ; 11', 12') eines einzigen U-förmigen Klemmbügels (10, 10') gebildet sind, wobei dessen Joch (15, 15') sich von einem Querkanal (7) zum anderen Querkanal (8) erstreckt und auf einem zwischen den Querkanälen (7, 8) angeordneten Verbindungssteg (9) aufsitzt und gehaltert wird.

2. Verbindungsanordnung nach Anspruch 1, dadurch gekennzeichnet, daß die beiden Schenkel (11, 12 ; 11', 12') des U-förmigen Klemmbügels (10, 10') eine unterschiedliche Länge aufweisen, wobei die Längendifferenz in etwa der Dicke der Ummantelung (5) des mehradrigen Flachkabels (3) entspricht.

3. Verbindungsanordnung nach Anspruch 1 oder 2, dadurch gekennzeichnet, daß die Enden der Schenkel (11, 12 ; 11', 12') des U-förmigen Klemmbügels (10, 10') mit abgewinkelten widerhakenförmigen Endabschnitten (13, 14 ; 13', 14') versehen sind, die zwischen den Seitenwandungen der Querkanäle (7, 8) des Klemmbereichs (1) verklemmbar sind.

4. Verbindungsanordnung nach Anspruch 3, dadurch gekennzeichnet, daß die unteren Enden der Schenkel (11, 12, 22, 23) des Klemmbügels (10, 10') zusammen mit ihren umgebogenen Endabschnitten (13, 14 ; 13', 14') schmale Klemmflächen (16, 17 ; 16', 17') bilden.

5. Verbindungsanordnung nach Anspruch 3 oder 4, dadurch gekennzeichnet, daß die Endabschnitte (13, 14) der Schenkel (11, 12) des Klemmbügels (10) einwärts und nach oben abgewinkelt sind.

6. Verbindungsanordnung nach Anspruch 3 oder 4, dadurch gekennzeichnet, daß die Endabschnitte (13', 14') des Klemmbügels (10') jeweils nach außen abgewinkelt sind.

7. Verbindungsanordnung nach einem der Ansprüche 3 bis 5, dadurch gekennzeichnet, daß die freien Enden der Endabschnitte (13, 14) im voll eingedrückten Zustand des Klemmbügels (10) den zwischen den Querkanälen (7, 8) angeordneten Verbindungssteg (9) von unten her untergreifen.

8. Verbindungsanordnung nach einem der Ansprüche 1 bis 4 und 6, dadurch gekennzeichnet, daß der Klemmbereich (1) zusätzlich mit zwei angeformten Stegen bzw. Laschen (18, 19) versehen ist, welche auf der dem Verbindungssteg (9) gegenüberliegenden Seite an der Unterkante jeweils in den Querkanal (7, 8) hineinragen, wobei diese Laschen (18, 19) derart ausgebildet sind, daß sie im voll eingedrückten Zustand des Klemmbügels (10') eine Verrastung mit den abgewinkelten Endabschnitten (13', 14') des Klemmbügels (10') ergeben.

9. Verbindungsanordnung nach einem der Ansprüche 1 bis 8, dadurch gekennzeichnet, daß die Schenkel (11, 12, 11', 12') des Klemmbügels (10, 10') zusätzliche, vorzugsweise verrastbare, Vorsprünge (20, 21) aufweisen.

10. Verbindungsanordnung nach einem der Ansprüche 1 bis 9, dadurch gekennzeichnet, daß die Außenfläche (9a) des zwischen den Querkanälen (7, 8) vorhandenen Verbindungssteges (9) gegenüber der Außenfläche (1a) des Klemmbereichs (1) tiefer gelegt ist.

11. Verbindungsanordnung nach einem der Ansprüche 1 bis 10, dadurch gekennzeichnet, daß der Klemmbügel (10) aus Metall gefertigt ist.

12. Verbindungsanordnung nach einem der Ansprüche 1 bis 10, dadurch gekennzeichnet, daß der Klemmbügel (10') aus Kunststoffmaterial gefertigt ist.

**Claims**

1. Connection arrangement for the connection of multicore flat cables (3) with a plug, which has a clamping region (1) with a plug channel (2), into which the multicore, partially stripped flat cable (3) can be introduced, the clamping region (1) being additionally provided with cross-channels (7, 8) which are above the plug channel (2), open out into the latter and in which clamping elements are arranged which can be pressed into the plug channel (2) and fixed so that a clamping of the sheathing (5) and of the individual, stripped insulated conductors (4) of the multicore flat cable (3) in the plug channel (3) is effected, characterized in that the clamping elements are formed by the limbs (11, 12 ; 11', 12') of a single U-shaped clamping clip (10, 10'), the yoke (15, 15') of which extends from one cross-channel (7) to the other cross-channel (8) and is seated and held on a connecting piece (9) arranged between the cross-channels (7, 8).

2. Connection arrangement according to Claim 1, characterized in that the two limbs (11, 12 ; 11', 12') of the U-shaped clamping clip (10, 10') have a different length, the difference in length corresponding approximately to the thickness of the sheathing (5) of the multicore flat cable (3).

3. Connection arrangement according to Claim 1 or 2, characterized in that the ends of the limbs (11, 12 ; 11', 12') of the U-shaped clamping clip (10, 10') are provided with angled-off barb-shaped end portions (13, 14 ; 13', 14') which can be clamped between the side walls of the cross-channels (7, 8) of the clamping region (1).

4. Connection arrangement according to Claim 3, characterized in that the lower ends of the limbs (11, 12, 22, 23) of the clamping clip (10, 10') form, together with their bent-round end portions (13, 14 ; 13', 14'), narrow clamping areas (16, 17 ; 16', 17').

5. Connection arrangement according to Claim 3 or 4, characterized in that the end portions (13, 14) of the limbs (11, 12) of the clamping clip (10) are angled off inwards and upwards.

6. Connection arrangement according to Claim 3 or 4, characterized in that the end portions (13′, 14′) of the clamping clip (10′) are each angled off outwards.

7. Connection arrangement according to one of Claims 3 to 5, characterized in that, in the fully pressed in state of the clamping clip (10), the free ends of the end portions (13, 14) engage underneath the connecting piece (9) arranged between the cross-channels (7, 8).

8. Connection arrangement according to one of Claims 1 to 4 and 6, characterized in that the clamping region (1) is additionally provided with two integrally attached lugs or tabs (18, 19), which in each case protrude at the lower edge into the cross-channel (7, 8) on the side opposite the connecting piece (9), these tabs (18, 19) being designed in such a way that, in the fully pressed-in state of the clamping clip (10′), they produce a locking with the angled-off end portions 13′, 14′) of the clip (10′).

9. Connection arrangement according to one of Claims 1 to 8, characterized in that the limbs (11, 12, 11′, 12′) of the clamping clip (10, 10′) have additional, preferably lockable, projections (20, 21).

10. Connection arrangement according to one of Claims 1 to 9, characterized in that the outer surface (9a) of the connecting piece (9) between the cross-channels (7, 8) is at a lower level than the outer surface (1a) of the clamping region (1).

11. Connection arrangement according to one of Claims 1 to 10, characterized in that the clamping clip (10) is made of metal.

12. Connection arrangement according to one of Claims 1 to 10, characterized in that the clamping clip (10′) is made of plastic.

## Revendications

1. Dispositif de connexion de câbles plats (3) à conducteurs multiples à un connecteur comportant une région de serrage (1) munie d'un canal d'enfichage (2) dans lequel le câble plat (3) à conducteurs multiples, partiellement dépourvu de sa gaine peut être introduit, la région de serrage (1) comportant au-dessus du canal d'enfichage (2) et débouchant dans ce dernier, des conduits transversaux (7, 8) dans lesquels sont disposés des éléments de serrage pouvant être enfoncés et bloqués dans le canal d'enfichage (2), de façon qu'il en résulte un serrage dans le canal d'enfichage (2) de la gaine (5) du câble plat (3) à plusieurs conducteurs et de ses conducteurs (4) individuels dénudés et isolés, caractérisé en ce que les éléments de serrage sont constitués par les montants (11, 12 ; 11′ 12′) d'une traverse de serrage unique (10, 10′) profilée en U, le fond (15, 15′) de ladite traverse s'étendant d'un conduit transversal (7) à un autre conduit transversal (8) et reposant et étant maintenu sur une barrette de liaison (9) située entre les conduits transversaux (7, 8).

2. Dispositif de connexion selon la revendication 1, caractérisé en ce que les montants (11, 12 ; 11′, 12′) de la traverse de serrage (10, 10′) profilée en U ont des longueurs différentes, la différence de longueur correspondant à peu près à l'épaisseur de la gaine (5) du câble plat (3) à conducteurs multiples.

3. Dispositif de connexion selon la revendication 1 ou 2, caractérisé en ce que les extrémités des montants (11, 12 ; 11′, 12′) de la traverse de serrage (10, 10′) profilée en U comportent des segments terminaux (13, 14 ; 13′, 14′) repliés en forme de barbes qui peuvent être serrés entre les parois latérales des conduits transversaux (7, 8) de la région de serrage (1).

4. Dispositif de connexion selon la revendication 3, caractérisé en ce que les extrémités inférieures des montants (11, 12, 22, 23) de la traverse de serrage (10, 10′) forment avec leurs segments terminaux (13, 14 ; 13′, 14′) repliés des surfaces de serrage (16, 17 ; 16′, 17′) étroites.

5. Dispositif de connexion selon la revendication 3 ou 4, caractérisé en ce que les segments terminaux (13, 14) des montants (11, 12) de la traverse de serrage (10) sont repliés vers l'intérieur et vers le haut.

6. Dispositif de connexion selon la revendication 3 ou 4, caractérisé en ce que chacun des segments terminaux (13′, 14′) de la traverse de serrage (10′) est replié vers l'extérieur.

7. Dispositif de connexion selon l'une des revendications 3 à 5, caractérisé en ce que les extrémités libres des segments terminaux (13, 14) se glissent sous la barrette de liaison (9) située entre les conduits transversaux (7, 8) lorsque la traverse de serrage (10) est totalement enfoncée.

8. Dispositif de connexion selon l'une des revendications 1 à 4 et 6, caractérisé en ce que la région de serrage (1) comporte, en outre, deux nervures ou languettes (18, 19) moulées, qui, sur le côté de l'arête inférieure situé en regard de la barrette de liaison (9), font saillie chacune dans le conduit transversal (7, 8), ces languettes (18, 19) étant constituées de telle sorte qu'elles forment un enclenchement avec les segments terminaux (13′, 14′) repliés de la traverse de serrage (10′) lorsque la traverse de serrage (10′) est complètement enfoncée.

9. Dispositif de connexion selon l'une des revendications 1 à 8, caractérisé en ce que les montants (11, 12 ; 11′, 12′) de la traverse de serrage (10, 10′) comportent d'autres saillies (20, 21), de préférence enclenchables.

10. Dispositif de connexion selon l'une des revendications 1 à 9, caractérisé en ce que la surface extérieure (9a) de la barrette de liaison (9) située entre les conduits transversaux (7, 8) est disposée en dessous de la surface extérieure (1a) de la région de serrage (1).

11. Dispositif de connexion selon l'une des revendications 1 à 10,
caractérisé en ce que la traverse de serrage (10) est métallique.

12. Dispositif selon l'une des revendications 1 à 10,
caractérisé en ce que la traverse de serrage (10') est faite en matière synthétique.

FIG.1

FIG.2

FIG.3

FIG.4